Europäisches Patentamt

European Patent Office

Office européen des brevets

(19)

(11) Veröffentlichungsnummer: **0 070 373**
**B1**

(12) **EUROPÄISCHE PATENTSCHRIFT**

(45) Veröffentlichungstag der Patentschrift:
11.06.86

(51) Int. Cl.⁴: **H 01 M 4/42, H 01 M 4/62**

(21) Anmeldenummer: 82104626.5

(22) Anmeldetag: 27.05.82

(54) Verfahren zur Verminderung der Korrosion von nicht amalgamiertem Zink.

(30) Priorität: 22.07.81 DE 3128900

(43) Veröffentlichungstag der Anmeldung:
26.01.83 Patentblatt 83/4

(45) Bekanntmachung des Hinweises auf die Patenterteilung:
11.06.86 Patentblatt 86/24

(84) Benannte Vertragsstaaten:
BE CH DE FR GB IT LI NL

(56) Entgegenhaltungen:
DE - A - 2 933 404
DE - B - 2 807 033
DE - B - 2 837 468

Mellor's Modern Inorganic Chemistry, ed.
Parks,Longman, Green and Co., London, New Ed. 1951,
Seiten 672, 624 und 635

(73) Patentinhaber: VARTA Batterie Aktiengesellschaft, Am
Leineufer 51, D-3000 Hannover 21 (DE)

(72) Erfinder: Gugenberger, Thorolf, Dr.,
Adalbert-Stifter-Strasse 15, D-6233 Kelkheim (DE)

(74) Vertreter: Kaiser, Dieter Ralf, Dipl.-Ing.,
Gundelhardtstrasse 72, D-6233 Kelkheim/Ts. (DE)

## Beschreibung

Die Erfindung betrifft ein Verfahren zur Herstellung einer Zinkpulverelektrode für galvanische Elemente.

Die verschärften Bestimmungen des Umweltschutzes haben vielerorts zu einer Abkehr von quecksilberhaltigem Zink für batterietechnische Zwecke geführt, zugleich aber auch die Frage nach einer Verminderung der Zinkkorrosion neu gestellt.

Die Zinkkorrosion läuft im alkalischen Medium über die folgenden Teilreaktionen ab:

anodisch $Zn + 4 OH^- = Zn(OH)_4^{2-} + 2e$ (1)

kathodisch $2 H_2O + 2e = 2 OH^- + H_2$ (2)

Meist ist die Reaktion (2) kinetisch gehemmt, so daß auch die Zinkauflösung nach Reaktion (1) entsprechend langsam abläuft. Die Reaktion (2) verlangsamt sich mit steigender Wasserstoffüberspannung der Zinkoberfläche.

Während an weniger reinem Handelszink immer lokale Oberflächenbereiche mit verringerter Wasserstoffüberspannung existieren, gebildet durch Einlagerung von Metallen, Kohlenstoff oder Matalloxiden, selbst von ZnO, erreicht die Wasserstoffüberspannung an hochreinem Zink sehr hohe Werte, sogar höhere als an Quecksilber, so daß die Gasentwicklung auf ein Minimum zurückgeht. Man hat daher häufig reinstes Zink anstelle von amalgamiertem Zink als Anodenmaterial zu verwenden gesucht. Andererseits ist aus der DE-OS 2933 404 eine Zinkelektrode bekannt, in welche Partikel u.a. aus Silber oder einem anderen, ggfs. auch mit Silber plattierten Metall künstlich eingearbeitet sind mit dem Ziel, einen Ohm'schen Spannungsabfall vom Äußeren der Elektrode zum Stromabnehmer hin zu erzeugen, der dafür sorgt, daß die Zinkabscheidung gleichmäßig von den inneren Teilender Platte nach außen und ohne erhebliche Änderung der Elektrodenmorphologie erfolgt.

Reinstes Zink verhält sich hier jedoch sehr kritisch, weil schon geringfügige Veränderungen seiner Oberfläche die Wasserstoffüberspannung erheblich zu beeinflussen vermögen. Allein durch kurzzeitige anodische Belastung einer Reinstzink-Elektrode wird deren Wasserstoffüberspannung stark erniedrigt. Nach Entlastung dauert es gewöhnlich mehrere Stunden, bis sich der ursprüngliche Elektrodenzustand wieder eingestellt hat. Dieser ist dann gekennzeichnet durch die Blockierung der obenstehenden kathodischen Teilreaktion (2), mit der auch die anodische Teilreaktion (1) zum Stillstand kommt.

Bei höheren Temperaturen als Raumtemperatur wie auch bei bewegtem Elektrolyten findet man eine zeitliche Zunahme der Korrosionsrate. So zeigt auch reinstes anfangs passives Zink, ohne daß es mit korrosionsfördernden Substanzen kontaminiert ist, eine deutliche Reaktivierungstendenz, die letztlich zur vollständigen Auflösung des Zinks führt.

Ungleich mehr als es bei amalgamiertem Zink der Fall ist, unterliegen Korrosion und Reaktivierungstendenz von sehr reinem Batterie-Zinkpulver auch starken Schwankungen. So weisen unterschiedliche Zinkchargen vom gleichen Pulvertyp nicht selten erhebliche Differenzen ihrer Ausgangsaktivitäten auf. Eine Korrosionsverringerung wird durch hohe $OH^-$-Ionenkonzentration sowie innarhalb eines gewissen Konzentrationsbereichs auch durch Erhöhung des ZnO-Gehaltes der Lauge erreicht, da in diesem falle das Gleichgewicht der Korrosionsbruttoreaktion

$H_2O + Zn = ZnO + H_2$ (3)

nach links verschoben wird. Nach eigenen Erfahrungen läßt sich der korrosionsmindernde Einfluß von ZnO im Elektrolyten nur bis zu einem Gehalt von etwa 3 Gew.% hin eindeutig nachweisen.

Der Erfindung liegt daher die Aufgabe zugrunde, Maßnahmen zur Aufrechterhaltung der Passivität von Reinstzink gegenüber aktivierenden Einflüssen anzugeben, so daß es als brauchbarer Ersatz für am algamiertes Zink in alkalischen Primärzellen angesehen werden kann. Die Aufgabe wird erfindungsgemäß mit den im kennzeichnenden Teil des Anspruchs 1 angegebenen Maßnahmen gelöst.

Die Silberdotierung ist mit Hilffe wässriger Lösungen von leicht löslichen Silbersalzen, mit denen das Zinkpulver geschüttelt wird, leicht durchführbar. Geeignet sind außer gewöhnlichen Silbersalzen auch leicht lösliche Komplexsalze des Silbers, vorzugsweise aber das Silberthiosulfat, in dessen alkalisch-wässriger Lösung das Silber in verschiedenartig zusammengesetzten Komplexen (Thiosulfatoargentate) von besonders großer Wasserlöslichkeit gebunden ist.

Durch diese Behandlung wird das Zink einerseits in einen pseudopassiven Zustand versetzt und darin stabilisiert, während andererseits die anodische Belastbarkeit im Vergleich zu derjenigen von aktivem Zink nur geringfügig erniedrigt ist. Eine sehr wirkungsvolle Stabilisierung wird bei einer Dotierung des Zinks mit 0,1 bis 0,6 Gew.% Silber, vorzugsweise 0,2 bis 0,3 Gew.%, erreicht. Man arbeitet zu diesem Zweck am besten auf folgende Weise:

In die auf 8 bis 10°C abgekühlte wässrige Lösung von 50 Gew.Tln. $Na_2S_2O_3 \cdot 5 H_2O$ und 0,23 Gew.Tln.AgO in 100 Gew.Tln. $H_2O$ werden unter Schütteln 100 Gew.Tle. Zn-Pulver zugesetzt und etwa 3 Minuten lang geschüttelt. Das Silber scheidet sich dabei quantitativ am Zink ab. Nach dem Auswaschen wird das Zinkpulver mit einer aus etwa 30 Gew.% KOH, 3 Gew.% ZnO, Rest bis 100 Gew.% aus Wasser zusammengesetzten Lauge behandelt, wobei die Laugetemperatur 50 - 70°C, vorzugsweise 60°C beträgt und die Verweildauer in der Lauge je nach der Temperatur zwischen 100 und 70 Stunden, vorzugsweise bei 90 Stunden liegt. Das so präparierte Zink kann vorteilhaft, ohne vorher gewaschen oder getrocknet werden zu müssen, mittels eines Elektrolytverdickers zu einer dosierfähigen Paste angeteigt und in Batterien verarbeitet werden.

Der Ansatz der erfindungsgemäßen Thiosulfatlösung mit AgO ist zweckmäßig, weil sich das Oxid mit $Na_2S_3O_3$ leicht komplex löst und weitere Anionen, die störend sind, ausgeschlossen bleiben. Im Kontakt mit dem Zink wird der Ag-Komplex rasch reduziert, und das entstehende Ag verteilt sich sehr gleichmäßig am Zink.

Untersucht man die Korrosion des versilberten Zinks in einer für alkalische Primärzellen üblichen zinkathaltigen Elektrolytlösung, so nimmt diese folgenden Verlauf:

Unmittelbar nach der Dotierung steigt die Korrosionsgeschwindigkeit zunächst stark an; sie durchläuft ein Maximum und fällt danach auf einen minimalen Wert, der nahe der Korrosionsrate von silberfreiem Zink liegt. Von diesem Zeitpunkt an bleibt die Reaktivierungstendenz deutlich unterhalb der von silberfreiem Zink. Dies führt dazu, daß nach einer gewissen Zeit die Korrosionsrate des versilberten Zinks kleiner wird als von Ag-freiem Zink.

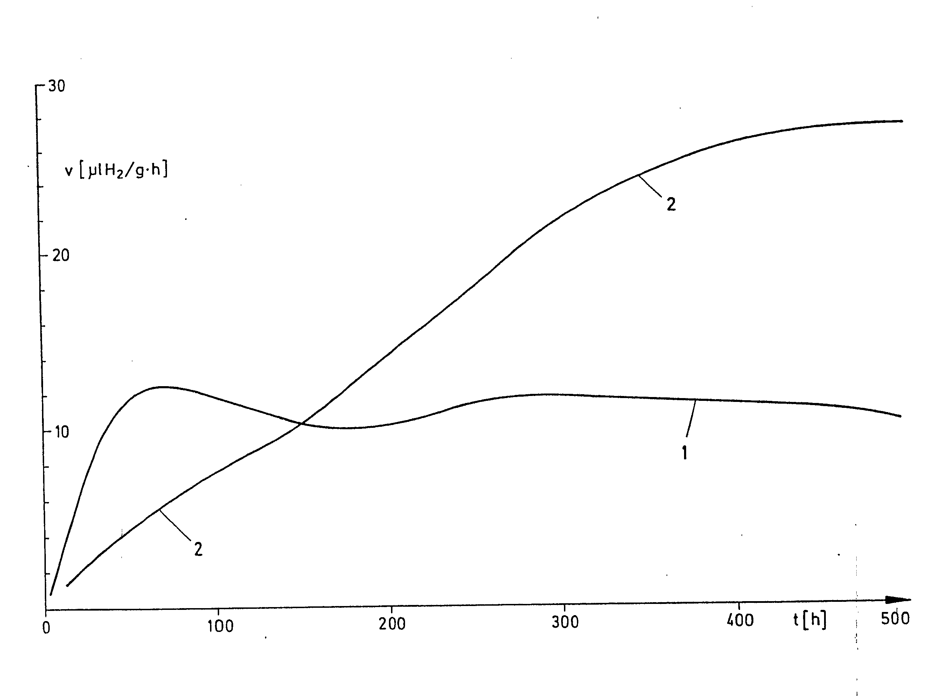

Die Figur zeigt die Gasungsrate v ($\mu l H_2$/g. h) als Maß für die Korrosionsgeschwindigkeit von Zinkproben, darunter einer erfindungsgemäß mit Ag dotierten, in Abhängigkeit von der Zeit (t). Dabei zeigt Kurve 1 den Reaktivierungsverlauf einer Probe aus handelsüblichem, für Primärelemente verwendetem Zink, Kurve 2 den einer Probe des gleichen Zinks mit einem Zusatz von 0,14 Gew.% Ag. Die Messungen erfolgten stets in einem Elektrolyten aus 35 Gew.% KOH, 3 Gew.% ZnO bei 60°C.

Danach steigt die Korrosionsrate bei der unversilberten Zinkprobe 2 im Verlaufe von 500 Stunden ziemlich stetig an, während bei der mit Ag-dotierten Probe 1 nach ca. 70 h ein Gasungsmaximum durchschritten wird, dem eine mehr oder weniger gleichbleibende Gasentwicklung auf niedrigerem Niveau folgt. Diese entspricht annähernd der Korrosionsrate von silberfreiem Zink, wobei vom Zeitpunkt des Gasungsmaximums an die Reaktivierungstendenz sogar deutlich unterhalb derjenigen von silberfreiem Zink bleibt. Dies führt dazu, daß nach einer gewissen Zeit die Korrosionsrate des versilberten Zinks kleiner wird als diejenige von Ag-freiem Zink. Durch die erfindungsgemäße Laugebehandlung des Ag-dotierten Zinkpulvers bei erhöhter Temperatur wird der pseudopassive Zustand des Elektrodenzinks bereits vor dem Einbau in die Batterie und ohne Inanspruchnahme des eigentlichen Batterieelektrolyten eingestellt.

Der Aufgrund der erfindungsgemäßen Maßnahme ausgelöste Effekt ist überraschend, weil nach hergebrachter Erfahrung die Kontaminierung eines unedlen Metalls mit anderen, insbesondere edleren Metallen eine Erhöhung der Korrosion hervorruft. In diese Richtung weist beispielsweise auch die DE-OS 2 00g g3i, derzufolge eine Zinkelektrode sich mit hoher Geschwindigkeit auflöst, wenn sie in geringer Menge ein Zusatzmetall aus der Gruppe III oder IV B des Periodensystems, beispielsweise Gallium oder Zinn, enthält.

Im erfindungsgemäßen Fall wird ausweislich der unverhältnismäßig hohen Gasungsrate innerhalb der ersten ca. 50 Stunden der Laugebehandlung zwar auch ein hoher Korrosionsstrom erzeugt, jedoch scheint die gleichmäßige Bedeckung der Zinkpulver-Teilchen mit dem aus der Thiosulfatlösung niedergeschlagenem Silber der Grund dafür zu sein, daß die Zink-Teilchen rasch und ebenso gleichmäßig von $Zn(OH)_2$ bzw. ZnO umhüllt werden, derart, daß alle anfänglich vorhandenen Inhomogenitäten, welche zu lokalen Korrosionsströmen Anlaß geben, rund um das Korn ausgeglichen sind. Das Zink wird somit auf dem Wege eines beschleunigten und umfassenden Korrosionsgriffs in den Zustand anhaltender Pseudopassivität versetzt und in diesem Sinne stabilisiert.

## Patentansprüche

1. Verfahren zur Herstellung einer Zinkpulverelektrode für galvanische Elemente, dadurch gekennzeichnet, daß nichtamalgamiertes Zinkpulver durch Behandlung in einer Silbersalzlösung mit Silber dotiert wird, daß das Zinkpulver anschließend einer zinkathaltigen warmen Lauge ausgesetzt wird und anschließend zu einer Elektrode geformt wird.

2. Verfahren nach Anspruch 1, dadurch gekennzeichnet, daß die Silberdotierung zwischen 0,1 und 0,6 Gew.% liegt.

3. Verfahren nach den Ansprüchen 1 und 2, dadurch gekennzeichnet, daß die Silberdotierung zwischen 0,2 und 0,3 Gew.% liegt.

4. Verfahren nach Anspruch 3, dadurch gekennzeichnet, daß das Silbersalz in der Silbersalzlösung Silberthiosulfat ist.

5. Verfahren nach Anspruch 4, dadurch gekennzeichnet, daß die Silberthiosuifatlösung aus etwa 100 Gew. Tln. $H_2O$, 50 Gew. Tln. $Na_2S_2O_3$ x 5 $H_2O$ und 0,23 Gew. Tln. AgO zusammengesetzt ist.

6. Verfahren nach den Ansprüchen 1 bis 5, dadurch gekennzeichnet, daß die Lauge aus etwa 30 Gew.% KOH, 3 Gew.% ZnO, Rest bis 100 Gew.% $H_2O$ zusammengesetzt ist.

7. Verfahren nach Anspruch 6, dadurch gekennzeichnet, daß die Lauge eine Temperatur von 50 bis 70°C besitzt und daß die Einwirkungszeit der Lauge auf das Zinkpulver 70 bis 100 h beträgt.

8. Verfahren nach einem der Ansprüche 1 bis 7, dadurch gekennzeichnet, daß anschließend an die Dotierungsbehandlung das Zinkpulver mit einem Elektrolytverdicker zu einer dosierfähigen Paste angeteigt wird.

## Revendications

1°/ Procédé pour la fabrication d'une électrode à poudre de zinc pour piles électriques, caractérisé par le fait que la poudre de zinc non amalgamé est dopée à l'argent par traitement dans une solution de sel d'argent, que la poudre de zinc est ensuite exposée à une solution alcaline chaude contenant un zincate et qu'elle est façonnée ensuite en une électrode.

2°/ Procédé selon la revendication 1, caractérisé le fait que le dopage à l'argent se situe entre 0,1 et 0,6 % en poids.

3°/ Procédé selon les revendications 1 et 2 caractérisé par le fait que le dopage à l'argent se situe entre 0,2 et 0,3% en poids.

4°/ Procédé selon la revendication 3, caractérisé par le fait que le sel d'argent dans la solution de sel d'argent est le thiosulfate d'argent.

5°/ Procédé selon la revendication 4, caractérisé par le fait que la solution de thiosulfate d'argent est composée d'environ 100 parties en poids d'eau, 50 parties en poids de $Na_2S_2O_3 \cdot 5H_2O$ et et de 0,23 parties en poids d'AgO.

6°/ Procédé selon les revendications 1 à 5, caractérisé par le fait que la solution alcaline est composée d'environ 30 % en poids de KOH, 3 % en poids de ZnO, le reste, jusqu'à 100 % en poids, étant de l'eau.

7°/ Procédé selon la revendication 6, caractérisé par le fait que la solution alcaline sur la poudre de zinc est de 70 à 100 heures.

8°/ Procédé selon l'une des revendications 1 à 7, caractérisé par le fait qu'à la suite du traitement de dopage, la poudre de zinc est convertie, avec un épaississant d'électrolyte, en une pâte susceptible d'être fractionnée.

**Claims**

1. A process for producing a zinc powder electrode for galvanic elements. characterised in that non-amalgamated zinc powder is doped with silver by treatment in a silver salt solution, that the zinc powder is then subjected to a hot lye solution containing zincate and formed into an electrode.

2. A process according to claim 1, characterised in that the silver doping is between 0.1 and 0.6% by wt.

3. A process according to claims 1 and 2, charcterised in that silver doping is between 0.2 and 0.3% by wt.

4. A process according to claim 3. characterised in that the silver salt in the silver salt solution is silver thiosulfate.

5. A process according to claim 4. characterised in that the silver thiosulfate solution contains approximately 100 wt. parts $H_2O$, 50 wt. parts $Na_2S_2O_3x5\ H_2O$ and 0.23 wt. parts AgO.

6. A process according to claims 1 to 5. characterisad in that the lye solution contains approximately 30% by wt. KOH. 3% by wt. ZnO. the remainder up to 100% by wt. $H_2O$.

7. A process according to claim 6, characterised in that the lye solution has a temperature of 50 to 70°C and that the reaction time of the lye solution on the zinc powder is 70 to 100 hrs.

8. A process according to any one of claims 1 to 7. characterised in that that after the doping treatment the zinc powder is stirred to a dopable paste using an electrolytic thickener.